# EUROPEAN PATENT SPECIFICATION

(11) **EP 2 302 202 B1**
(45) Date of publication and mention of the grant of the patent: **29.08.2012**
(21) Application number: 09466021.4
(22) Date of filing: 24.09.2009
(51) Int. Cl.: F03B 13/00

(54) **Hydraulic propulsion for increases of hydroelektric power station capacity**
Hydraulischer Antrieb für Steigerungen der Kapazität eines Wasserkraftwerks
Propulsion hydraulique pour les augmentations de la capacité de station d'alimentation hydroélectrique

(43) Date of publication of application: 30.03.2011
(73) Proprietor: Lostak, Jan, 779 00 Olomouc (CZ)
(72) Inventor: Lostak, Jan, 779 00 Olomouc (CZ)

(56) References cited:
- WO-A1-2007/076866
- DE-A1- 10 011 197
- GB-A- 2 001 395

## Description

### Technical field

Invention is concerned with a new plant serves for increases of Hydroelectric Power Station capacity while keeping the same usable head and flow of water. Supposed usage of this mechanism will be in Hydroelectric Power Stations (pumped storage Hydroelectric Power Stations include), working on the principle of two interconnected tanks, with a difference in height of both water levels. Invention transforms water energy into energy of compressed air, which is possible to store in the storage of compressed air. The rate of the compressed air deflation from the compressed-air reservoir is not limited anyway, that's why it is possible to reach higher peak energy power, than the Hydroelectric Power Station will provide by itself. This invention is able to stabilise the fluctuation of electric capacity in distribution network.

### Present state of technology

The most significant plant of Hydroelectric Power Station is water turbine who converts hydraulic energy of flowing water to mechanical power (shaft rotation). One of the important parameters of water turbine is its mechanical power. That presents mechanical energy transferred by its shaft. Theoretical turbine power, if we leave out its efficiency and other dissipations, depends on two basic parameters, flow rate Q and specific energy E, which is given by usable head H.

Theoretical water turbine power is given by overall relation *Pₜ* = *Q*.ρ.*g*.*H*, unit (*W*), where ρ means water density, *g* gravitational acceleration

Water turbine capacity is possible to increase by the flow of water through a turbine or by increasing of usable head, eventually through the combination of both of them.

Hydroelectric Power Stations are usually built on rivers where they are embanked. Typical example can be Hydroelectric Power Station on a dam reservoir. On one side of a dam (in front of a dam) there is created artificial lake and on the other side (behind a dam) flows out Natural River. Difference in height of both water levels in front of and behind a dam is called usable head. By increasing height of a dam (usable head), area around will be flooded counter a course of a river. Consequently, that means that one of the important parameter of Hydroelectric Power Station capacity is impossible to increase and it is determined by natural conditions and by a technical construction of hydroelectric installation (a dam reservoir). Another parameter determining the capacity of Hydroelectric Power Station is flow of water. This parameter is also in practice noncontrollable, because it is due to flow of river into a dam reservoir influent, respectively from a dam reservoir flowing out. By increasing flow of water into the Hydroelectric Power Station there would be an area flooding facing a river flowing out a dam reservoir. The last parameter determines Hydroelectric Power Station capacity, which is possible to influence, is the water turbine efficiency. At present water turbines maintain efficiency at about 90%.

Hydroelectric Power Stations in distribution network are usually used as a peak energy power source, which are determined to stabilise distribution network. The advantage is their ability to start at full power very fast, but their maximum capacity is limited by the quantity of flow water through their water turbines. Effort of this invention is to increase Hydroelectric Power Station capacity in a different way than just by increasing water turbine efficiency, whereas practically influenceable parameters, like a flow of water and a usable head, remain unchanged. This invention is able to transform water energy into the compressed air energy, which is stored into a compressed air reservoir. When is necessary to reach high capacity of the Hydroelectric Power Station is the compressed air, stored in compressed air reservoir, transformed into electric energy by the high-pressure turbine. The capacity of Hydroelectric Power Station is considerably increased.

### Subject matter of engineering solution

Presented goal is possible to reach by invention, which is called "Hydraulic propulsion for increase of Hydroelectric Power Station capacity".

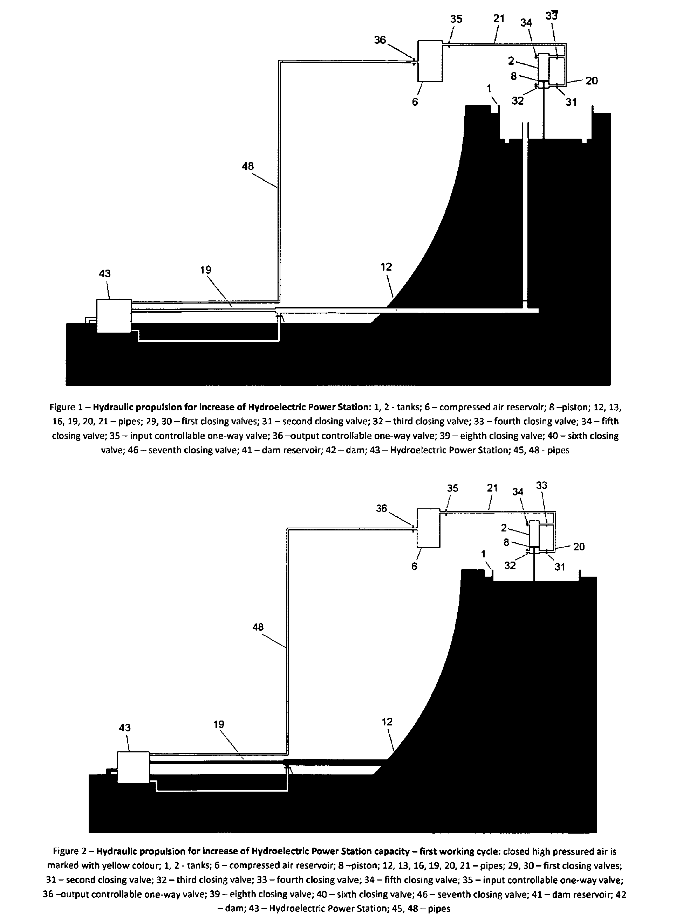

Invention, figure 1, is constructed by two tanks 1 and 2. The tank 1 is partly opened in that way so that it floats afloat a dam reservoir 41 and is permanently connected with a piston 8 which is closed in tank 2. Tank 1 is connected through pipes 13 and 12 with pipe 19. Water from tank 1 is possible to desist through pipes 13, 12 and 19 into Hydroelectric Power Station 43. Tank 2 is connected through pipes 20 and 21 with a compressed air reservoir 6 which is through pipe 48 joined on Hydroelectric Power Station 43. The whole Hydraulic propulsion is equipped with a closing valves system: first closing valves 29, 30, second closing valve 31, third closing valve 32, fourth closing valve 33, fifth closing valve 34, sixth closing valve 40, seventh closing valve 46, eighth closing valve 39 and with a system of controllable one-way valves: input controllable one-way valve 35 and output controllable one-way valve 36.

Tank 1 is from % flooded with water from a dam reservoir 41 and it floats afloat, see figure 2. The force keeping tank 1 afloat a dam reservoir 41 is given by an Archimedes principle. In case that the whole construction of the tank 1 would have no weight, the water level in tank 1 would be at the same level, like a water level in a dam reservoir 41. Whereas a tank construction 1 has a weight there will arise a level difference, which is determined by a weight of a tank construction 1, see figure 2. Tank 1 is tied so that it can move only vertically (up and down). Tank 2 is firmly fastened so that it cannot move.

The Hydraulic propulsion works in two consecutive and still repeating cycles. In the first working cycle, tank 1 is flooded from ¾ with water, see figure 2. Next, first, second, fifth and eighth closing valves 29, 30, 31, 34, 39 will be closed and third, fourth, and sixth closing valves 32, 33, 40 will be opened. A space of tank 2 above the piston 8 is totally closed and filled up with atmospheric air. Water from tank 1 is desisted to turbines in Hydroelectric Power Station 43 through pipes 13, 12 and 19. Desisting of water from tank 1 will cause, that lifting force will lift tank upwards. Level difference of tank 1 and dam reservoir 41 remain the same, it is due to the weight of a tank construction 1. Tank 1 is firmly connected with the piston 8 placed in tank 2, whose subsequent motion causes a pressure alteration of a closed atmospheric air. Through opened fourth closing valve 33 and input controllable one-way valve 35, compressed air will get to compressed air reservoir 6, from which it is brought to Hydroelectric Power Station 43 through the output controllable one-way valve 36, when it is necessary, high-pressure turbines help to water turbines to rotate electrical generators and it increases the maximum capacity of Hydroelectric Power Station.

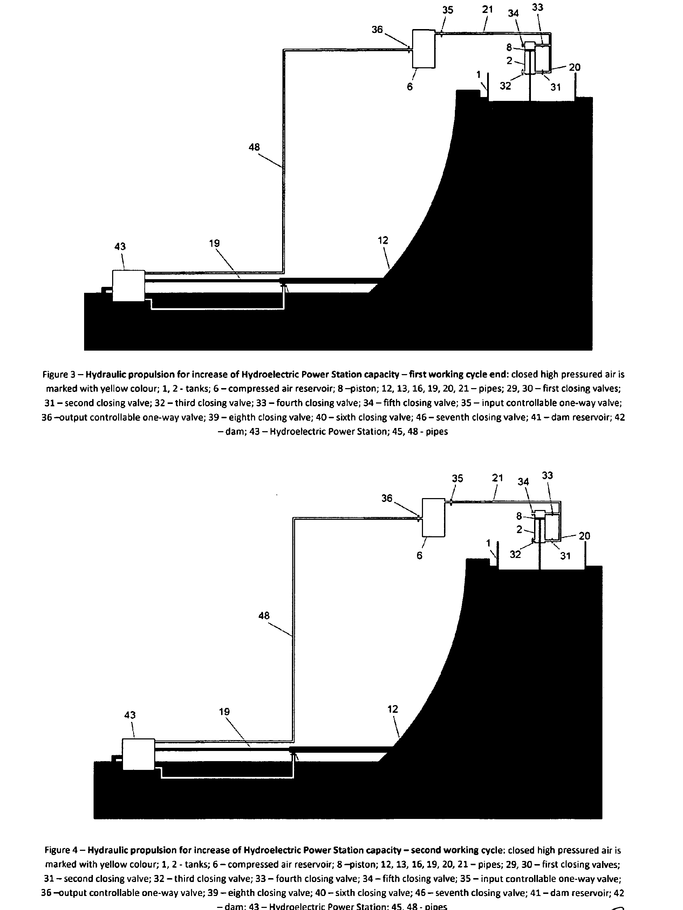

In the second working cycle, see figure 4, third, fourth, and sixth closing valves 32, 33, 40 (primarily opened) will be closed. At the same time, first, second, fifth and eighth closing valves 29, 30, 31, 34, 39 will be opened. First closing valves 29, 30 which are opened cause filling tank 1 with water from a dam reservoir 41, which will sink down owing to its weight whereon gravitation force takes an effect. Closed atmospheric air in a lower part of tank 2 is compressed by the motion of a piston 8. The motion of a piston 8 causes pressure alteration of closed atmospheric air. Through the opened second closing valve 31 and controllable one-way valve 35, compressed air will get into compressed air reservoir 6, where it is led in to Hydroelectric Power Station 43, where through high pressure turbines it helps water turbines to rotate electrical generators.

The Hydraulic propulsion uses two new forces that they have not been used for electricity production up to now - a lifting force effecting tank 1 which cause its lifting in the first working cycle and a gravitation force effecting heavy tank construction 1, causing its back falling by watering in the second working cycle.

Compressed air reservoir 6 is possible to use for storing compressed air (for instance offpeak electrical energy).

### Figures diagram on an enclosed technical drawing

Specific example of engineering solution is schematically described on an attached technical drawing where:
Figure 1 Hydraulic propulsion for increase of Hydroelectric Power Station capacity
Figure 2 Hydraulic propulsion for increase of Hydroelectric Power Station capacity- the first working cycle
Figure 3 Hydraulic propulsion for increase of Hydroelectric Power Station capacity -the first working cycle, the end
Figure 4 Hydraulic propulsion for increase of Hydroelectric Power Station capacity - the second working cycle

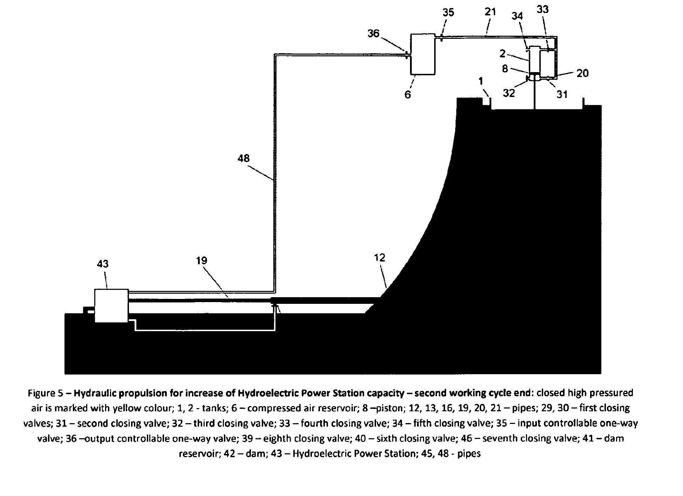

Figure 5 Hydraulic propulsion for increase of Hydroelectric Power Station capacity - the second working cycle, the end

### An example of engineering solution performance

Hydraulic propulsion, see figure 1, consists of two tanks 1 and 2. Tank 1 is partly opened so that it floats afloat a dam reservoir 41 and is firmly connected with a piston 8 which is closed in a tank 2. Tank 1 is joined through pipes 13, 12 with a pipe 19. Water from a tank 1 is possible to desist through pipes 13, 12 and 19 into Hydroelectric Power Station 43. Tank 2 is joined through pipes 20 and 21 with a compressed air reservoir 6 which is through pipes 48 connected to Hydroelectric Power Station 43. The whole Hydraulic propulsion is equipped with a closing valves system: first closing valves 29, 30, second closing valve 31, third closing valve 32, fourth closing valve 33, fifth closing valve 34, sixth closing valve 40, seventh closing valve 46, eighth closing valve 39 and with a system of controllable one-way valves: input controllable one-way valve 35 and output controllable one-way valve 36.

Tank 1 is from ¾ flooded with water from a dam reservoir 41 and it floats afloat and is fastened so that it can move just vertically (upwards and downwards). Tank 2 is fastened so that it cannot move.

The Hydraulic propulsion works in two successive and still repeating cycles. In the first working cycle a tank 1 is from ¾ flooded with water, see figure 2. Next, first, second, third, fifth and eighth closing valves 29, 30, 31, 34, 39 will be closed and third, fourth and sixth closing valves 32, 33, 40 will be opened. Area of a tank 2 above a piston 8 is wholly closed and filled up with atmospheric air. Water from a tank 1 is desisted through pipes 12, 13 and 19 to turbines into Hydroelectric Power Station 43. Desisting water from a tank 1 will cause that the lifting force is lifting a tank upwards. The difference between water levels of a tank 1 and a dam reservoir stay the same; it is given by a weight of a tank construction 1. A tank 1 is firmly connected with a piston 8 situated in a tank 2 whose subsequent motion causes a pressure alteration of an atmospheric air that is closed. Compressed air will get through a fourth closing valve 33 and through input controllable one-way valve 35 to the compressed air reservoir 6, from that through a output controllable one-way valve 36 it is led into Hydroelectric Power Station 43 where through high pressure turbines it helps water turbines to rotate electrical generators.

In the second working cycle, see figure 4, third, fourth and sixth closing valves (primarily opened) 32, 33, 40 will be closed. At the same time first, second, fifth and eighth closing valves 29, 30, 31, 34, 39 will be opened.

First closing valves which are opened 29, 30 will cause filling water from a dam reservoir in tank 1 which will due to its weight sink down, because it is influenced by a gravitation force. Atmospheric air, which is closed in a lower part of a tank 2, is compressed by the motion of a piston 8. The motion of a piston 8 causes a pressure alteration of a closed atmospheric air. Through second closing valve 31 and input controllable one-way valve 35 will compressed air get into a compressed air reservoir 6 from that it is led into Hydroelectric Power Station 43 where through high pressure turbines it helps water turbines to rotate electrical generators.

### Industrial applicability

The Hydraulic propulsion is possible to use as a plant for increasing capacity of Hydroelectric Power Station, eventually it transforms water energy into energy of compressed air, which is possible to store in the storage of compressed air. In connection with pumped storage Hydroelectric Power Station, the Hydraulic propulsion make possible to store electric energy from the distribution network into compressed air.

## Claims

1. Hydraulic propulsion to increase Hydroelectric Power Station capacity, which includes a tank (1), floating on water level of a dam reservoir (41), is equipped with first closing valves (29), (30) and joined through pipes (13), (12) and (19) to Hydroelectric Power Station (43) whereas the tank construction (1) is firmly connected with a connecting rod to a piston (8) closed in a fixed tank 2 which is equipped with second, third, fourth and fifth closing valves (31), (32), (33), (34) and joined through a pipe (20), (21) to a compressed air reservoir (6) which is connected to Hydroelectric Power Station (43) through pipe (48).

2. Hydraulic propulsion as claimed in claims 1 which includes that the tank (1) is fastened so that it can move only in a vertical direction and it is possible to fix it firmly.

3. Hydraulic propulsion as claimed in claim 1 which includes that the tank (1) can be filled with water from a dam reservoir (41) through first closing valves (29) and (30) and through pipes (13), (12) and (19) which are joined on Hydroelectric Power Station (43), whereby with a sixth closing valve (40), which closes the connection between the tank (1) and the Hydroelectric Power Station (43) is closed, it is possible to desist this water again.

4. Hydraulic propulsion as claimed in claims 1 which includes that the tank (2) can be filled with atmospheric air through third and fifth closing valves (32), (34).

5. Hydraulic propulsion as claimed in claims 1 which includes that water desisting from a tank (1) when the tank (1) is moving upwards whereas a piston (8) is closed in the fixed tank (2) with opened third and fourth closing valves (32), (33) and closed second and fifth closing valves (31), (34) causes pressure increasing of atmospheric air which is consequently transferred through pipe (21) into a compressed air reservoir (6).

6. Hydraulic propulsion as claimed in claims 1, which includes that by filling water from the dam reservoir (41) into the tank (1) through opened first closing valves (29), (30) and closed sixth closing valve (40) it is moving downwards whereas a piston (8) is closed in the fixed tank (2) with opened second and fifth closing valves (31), (34) and closed third and fourth closing valves (32), (33) causes pressure increasing of atmospheric air which is subsequently transferred through pipes (20), (21) into a compressed air reservoir (6).

## Patentansprüche

1. Hydraulischer Antrieb für die Steigerung der Kapazität eines Wasserkraftwerks einschließlich eines Tanks (1), schwimmend auf der Wasseroberfläche eines Sammelbeckens (41), ausgestattet mit den ersten Absperrventilen (29), (30) und durch die Leitungen (13), (12) und (19) verbunden mit dem Wasserkraftwerk (43), wobei die Tankkonstruktion (1) fest verbunden ist mit einer Verbindungsstange an einem Kolben (9), der in einem stationären Tank 2 eingeschlossen ist, der mit dem zweiten, dritten, vierten und fünften Absperrventil (31), (32), (33), (34) ausgestattet ist und über eine Rohrleitung (20), (21) an ein Druckluftreservoir (6) angeschlossen ist, das über eine Rohrleitung (48) mit dem Wasserkraftwerk (43) verbunden ist.

2. Hydraulischer Antrieb nach Anspruch 1, einschließlich der Befestigung des Tanks (1) in einer solchen Weise, dass er sich nicht in die vertikale Richtung verschieben kann und es möglich ist, ihn zu befestigen.

3. Hydraulischer Antrieb nach Anspruch 1, einschließlich der Möglichkeit zur Befüllung des Tanks (1) mit Wasser aus einem Sammelbecken (41) durch die ersten Absperrventile (29) und (30) und durch die Rohrleitungen (13), (12) und (19), die mit dem Wasserkraftwerk (43) verbunden sind, wodurch mit einem sechsten Absperrventil (40), das die Verbindung zwischen dem Tank (1) und dem Wasserkraftwerk (43) schließt, dieses Wasser erneut abgelassen werden kann.

4. Hydraulischer Antrieb nach Anspruch 1, einschließlich dass der Tank (2) mit atmosphärischer Luft durch ein drittes und viertes Absperrventil (32), (34) befüllt werden kann.

5. Hydraulischer Antrieb nach Anspruch 1, einschließlich, dass das Wasser aus einem Tank (1) abgelassen wird, wenn der Tank (1) sich nach oben bewegt, wenn der Kolben (8) in dem stationären Tank (2) mit den geöffneten dritten und vierten Absperrventilen (32), (33) und den geschlossenen zweiten und fünften Absperrventilen (31), (34) einen Druckanstieg in der atmosphärischen Luft herbeiführen, die infolgedessen durch die Leitung (21) in ein Druckluftreservoir (6) übertragen wird.

6. Hydraulischer Antrieb nach Anspruch 1, einschließlich, dass mit der Befüllung von Wasser aus dem Sammelbecken (41) in den Tank (1) durch die geöffneten ersten Absperrventile (29), (30) und das geschlossene sechste Absperrventil (40), nach unten bewegt wird, wodurch der Kolben (8) im stationären Tank (2) mit geöffneten zweiten und fünften Absperrventilen (31), (34) und geschlossenen dritten und vierten Absperrventilen (32), (33) einen Druckanstieg der atmosphärischen Luft herbeiführen, die dann durch die Rohrleitungen (20), (21) in ein Druckluftreservoir (6) übertragen wird.

## Revendications

1. Propulsion hydraulique pour les augmentations de la capacité de station d'alimentation hydroélectrique comportant une cuve (1) qui flotte sur la surface de l'eau du barrage (41), est équipée des premières vannes de fermeture (29), (30) et est reliée à la Station d'alimentation hydroélectrique (43) par les tuyaux (13), (12) et (19), alors que la structure de la cuve (1) est solidement reliée par une tige de connexion à un piston fermé (8) dans une cuve fixe (2) qui est équipée des deuxième, troisième, quatrième et cinquième vannes de fermeture (31), (32), (33), (34) et est branchée par un tuyau (20), (21) à un réservoir d'air comprimé (6) qui, à son tour, est relié à la Station d'alimentation hydroélectrique (43) par le tuyau (48).

2. Propulsion hydraulique selon la revendication 1 dans laquelle la cuve (1) est fixée de façon à ne pouvoir se déplacer que dans le sens vertical et à pouvoir être fixée fermement.

3. Propulsion hydraulique selon la revendication 1 dans laquelle la cuve (1) peut être remplie d'eau venant du réservoir du barrage (41) par les premières vannes de fermeture (29) et (30) et par les tuyaux (13), (12) et (19) qui mènent à la station d'alimentation hydroélectrique (43) sachant que la sixième vanne de fermeture (40) qui ferme le branchement entre la cuve (1) et la Station d'alimentation hydroélectrique (43) permet de faire évacuer cette eau.

4. Propulsion hydraulique selon la revendication 1 dans laquelle la cuve (2) peut être remplie d'air atmosphérique par les troisième et cinquième vannes de fermeture (32), (34).

5. Propulsion hydraulique selon la revendication 1 dans laquelle l'eau, qui quitte la cuve (1) lorsque cette cuve (1) est en train de monter et que le piston (8) de la cuve (2) est fermé avec les troisième et quatrième vannes de fermeture (32), (33) ouvertes et les deuxième et cinquième vannes de fermeture (31), (34) fermées, entraine une augmentation de la pression de l'air atmosphérique qui est donc transféré dans le réservoir d'air comprimé (6) par le tuyau (21).

6. Propulsion hydraulique selon la revendication 1 dans laquelle l'eau, qui arrive depuis le réservoir du barrage (41) dans la cuve (1) par les premières vannes de fermeture (29), (30) ouvertes lorsque la sixième vanne de fermeture (40) est fermée, fait descendre cette cuve alors que le piston (8) de la cuve fixe (2) est fermé avec les deuxième et cinquième vannes de fermeture (31), (34) ouvertes et les troisième et quatrième vannes de fermeture (32), (33) fermées et entraine ainsi une augmentation de la pression de l'air atmosphérique qui est ensuite transféré dans un réservoir d'air comprimé (6) par les tuyaux (20), (21).
